# EUROPÄISCHE PATENTSCHRIFT

(11) **EP 2 097 544 B1**
(45) Veröffentlichungstag und Bekanntmachung des Hinweises auf die Patenterteilung: **16.03.2016**
(21) Anmeldenummer: 07846709.9
(22) Anmeldetag: 21.11.2007
(51) Int. Cl.: C21D 1/42, C21D 9/50, B23K 26/24, H05B 6/36

(54) **VERFAHREN UND VORRICHTUNG ZUR WÄRMEBEHANDLUNG VON SCHWEISSNÄHTEN**
METHOD AND APPARATUS FOR THE HEAT TREATMENT OF WELDS
PROCÉDÉ ET DISPOSITIF DE TRAITEMENT THERMIQUE DE CORDONS DE SOUDURE

(30) Priorität: 22.11.2006 DE 102006055402; 26.05.2007 DE 102007024654; 15.11.2007 DE 102007054876
(43) Veröffentlichungstag der Anmeldung: 09.09.2009
(73) Patentinhaber: SMS group GmbH, 40237 Düsseldorf (DE)
(72) Erfinder: KÜMMEL, Lutz, 41363 Jüchen (DE); BEHRENS, Holger, 40699 Erkrath (DE); LENGSDORF, Christian, 42855 Remscheid (DE); JÜRGENS, Robert, 42855 Remscheid (DE)
(74) Vertreter: Klüppel, Walter
(86) Internationale Anmeldenummer: PCT/EP2007/010074
(87) Internationale Veröffentlichungsnummer: WO 2008/061722

(56) Entgegenhaltungen:
- EP-A- 0 190 378
- EP-A- 1 285 719
- FR-A- 2 823 459
- KHERSONSKY A ET AL: "INDUCTION HEATING FOR EFFICIENT LASER APPLICATIONS" ADVANCED MATERIALS AND PROCESSES, AMERICAN SOCIETY FOR METALS, METALS PARK, OH, US, Bd. 157, Nr. 2000, April 2000 (2000-04), Seiten 39-41, XP001119385 ISSN: 0882-7958

## Beschreibung

Die Erfindung betrifft ein Verfahren und eine Vorrichtung zur induktiven Wärmebehandlung von Schweißnähten in einer Schweißmaschine mit einem Laser-Schweißkopf zur Verbindung von Stahlbändern, wobei ein Erwärmungsprozess der Schweißnaht und der angrenzenden Schweißnahtbereiche vor und hinter der eigentlichen Schweißung mittels Linieninduktoren durchgeführt wird.

Bei der Schweißung und insbesondere beim Laserstrahlschweißen von Blechen wird eine sehr große Energiemenge konzentriert in einen sehr schmalen Bereich der Fügezone eingebracht. Da die an diesen stark erhitzten Bereich angrenzenden Blechbereiche Umgebungstemperatur haben, kommt es im Anschluss an das Verschweißen auf Grund des hohen Temperaturgefälles zu einer sehr schnellen Abkühlung. Hierdurch ergeben sich Gefügeveränderungen, die die mechanischen Eigenschaften in diesem Bereich erheblich verschlechtern können. Durch eine gezielte Wärmebehandlung dieses betroffenen Schweißnahtbereiches vor und hinter der eigentlichen Schweißung wird deshalb versucht, Einfluss auf die Abkühlung nach dem Schweißvorgang zu nehmen. Ziel der Vorerwärmung ist dabei die Rissvermeidung unmittelbar nach dem Schweißvorgang und die Erhöhung des Energieinhaltes des Nahtbereiches zur Reduzierung der Abkühlgeschwindigkeit. Die nach dem Schweißen stattfindende Nacherwärmung dient dann zur weiteren Reduzierung der Abkühlgeschwindigkeit.

Die Wärmebehandlung des Schweißnahtbereiches kann dabei durch eine thermische Erwärmung, beispielsweise mittels Gas- oder Plasmabrenner oder durch eine induktive Erwärmung durchgeführt werden. Die Wärmebehandlung der Schweißnaht erfolgt üblicherweise durch die einseitige Anordnung der Brenner bzw. der Induktoren an der Bandober- oder Unterseite. Daraus folgt eine verfahrensbedingte ungleichmäßige Temperaturverteilung und daraus folgend eine ungleichmäßige Wärmebehandlung über die Schweißnahthöhe. Bei kurzen Aufheizzeiten und hohen spezifischen Heizleistungen verstärkt sich diese Unsymmetrie dann weiter.

Für die aus den oben angeführten Gründen erforderliche Wärmebehandlung sind unterschiedliche Verfahren und auch Vorrichtungen bekannt. So ist aus der DE 10 2004 001 166 A1 ein Verfahren zum Laserschweißen mit Vor- und/oder Nachwärmung im Bereich der Schweißnaht bekannt, die mit dem Laserstrahl des Laser-Schweißkopfs durchgeführt wird, wobei dieser mit im Wesentlichen gleicher Leistung wie zum Schweißen erforderlich und mit gleicher Fokussierung aber erhöhter Vorschubgeschwindigkeit und ggf. mehrfach über den zu behandelnden Nahtbereich geführt wird. Eine Alternative zu diesem Verfahren besteht darin, dass der Laserstrahl mit erhöhter Defokussierung und ggf. auch langsamer über den zu behandelnden Nahtbereich geführt wird.

Die Technische Druckschrift "INDUCTION HEATING FOR EFFICIENT LASER APPLICATION", ADVANCED MATERIAL AND PROCESSES, AMERICAN SOCIETY FOR METALS, METALS PARK; OH; US; Bd. 157, Nr. 2000 April 2000 (2000-4), Seiten 39-41, XP-001119385 ISSN: 0882-7958; Anatoly Khersonsky, Houston Lee, beschreibt ein Verfahren zur mehrstufigen Vor- und Nacherwärmung von Schweißnähten.

In der EP 1 285 719 B1 wird eine Laserauftragsschweißung auf eine sich drehende Welle beschrieben, wobei zur stufenweisen Vorwärmung ein kreissegmentförmiger Induktor verwendet wird, dessen Segmente die an die Welle örtlich vor dem Laserstrahl-Bearbeitungskopf angelegt sind. Die Realisierung der beiden Vorwärmzyklen geschieht mit zwei verschiedenen, relativ zueinander und relativ zum Laserstrahl-Auftreffpunkt fest angeordneten Induktoren, wobei die Wärmeflussdichte des ersten Induktors kleiner und die Wärmeeinwirkzeit und die Wirkfläche des Induktors größer als die entsprechenden Werte des zweiten Induktors sind. Die Temperatursteigerung erfolgt demnach im ersten Vorwärmzyklus flacher als im zweiten Vorwärmzyklus. Beide Induktoren können mit unterschiedlichen Frequenzen betrieben werden, sie können aber auch körperlich in einem Induktor vereinigt werden, wobei unterschiedliche induktive Feldkonzentrationen durch Magnetfeldverstärkungselemente, einen anderen Induktorquerschnitt oder einen engeren Windungsabstand erreicht werden. Bei besonders rissempfindlichen Werkstoffen kann auch ein induktiver Nachwärmzyklus angeschlossen werden, wobei der hier verwendete Induktor mit den beiden Induktoren der Vorwärmzyklen zu einem gemeinsamen Induktor vereinigt wird.

In der DE 101 52 685 A1 wird eine Vorrichtung vorgeschlagen, mit der die Schweißnaht und die beiderseits der Schweißnaht angeordneten Wärmeeinflusszonen mit einem oder mehreren hintereinander entlang der Schweißnaht bei Offline-Betrieb fest angeordneten oder bei Online-Betrieb verfahrbaren Linieninduktoren eine lokale induktive Wärmebehandlung eines geschweißten Werkstücks durchgeführt werden kann. Innerhalb des Wirkungsbereichs der Linieninduktoren sind Abschirmelemente im Verhältnis zu den Linieninduktoren so angeordnet, dass sie einen Teil des von den Linieninduktoren im Betrieb beaufschlagten Werkstückbereichs von dem von den Linieninduktoren erzeugten Wechselmagnetfeld abschirmen.

Ausgehend von diesem geschilderten Stand der Technik besteht die Aufgabe der Erfindung darin, ein Verfahren und eine Vorrichtung zur Wärmebehandlung von Schweißnähten der vorstehend genannten Art so weiter auszubilden, dass die Gefahr einer Rissbildung oder Gefügeveränderung im Bereich der Schweißnaht bei der Schweißung von Stahlblechen weitgehend minimiert wird.

Die gestellte Aufgabe wird mit dem Gegenstand des Anspruchs 1 verfahrensmäßig dadurch gelöst, dass die Erwärmung des Schweißnahtbereiches mittels eines definiert einstellbaren mehrfach gestuften Linieninduktors mit Zonen unterschiedlicher Leistungsdichten erfolgt, der mit einer mehrfachen Aufteilung seiner Leiterschleifenlängen und/oder mit einer unterschiedlichen Beblechung der Leiterschleifen und/oder mit mehreren unterschiedlichen Abstandsstufen zum Stahlband ausgebildet ist. Die mehrstufige Erwärmung wird erfindungsgemäß durch eine Aufteilung der gesamten für die Erwärmung aufzubringenden Heizleistungsdichte auf die einzelnen Erwärmungsstufen durchgeführt, wobei in der ersten Erwärmungsstufe ein steilerer Temperaturanstieg als in der folgenden Erwärmungsstufe stattfindet.

Eine Vorrichtung zur Durchführung dieses Verfahrens ist durch die Merkmale des Anspruchs 4 gekennzeichnet.

So kann beispielsweise bei einer zweistufigen Erwärmung die Leistungsaufteilung zwischen der ersten und der zweiten Erwärmungsstufe im Verhältnis 3 : 1 durchgeführt werden. Das Ergebnis einer derartigen Leistungsaufteilung ist ein langsamerer Temperaturanstieg in der zweiten gegenüber der ersten Erwärmungsstufe. Hierdurch wird nicht nur ein kleinerer Temperaturgradient zwischen der Bandoberseite und der Bandunterseite gegenüber einer einstufigen Erwärmungsstufe erzielt, sondern auch die Gefahr einer Gefügeüberhitzung bei Annäherung an die gewünschte Endtemperatur minimiert. Mit Vorteil kann bei der mehrstufigen Erwärmung zwischen einzelnen Erwärmungsstufen auch eine Haltezeit bei einer speziell angepassten Temperatur, die durch Temperaturmessung ermittelt wird, mit anschließender Kühlung des vorher aufgewärmten Schweißnahtbereiches eingestellt werden, an die dann eine Wiedererwärmung anschließt. Zur Erzeugung dieser Ausgleichszonen zwischen einzelnen Erwärmungszonen können beispielsweise einzelne Leiterschleifen unterbrochen werden.

Die Linieninduktoren für die Vor- und Nacherwärmung sind erfindungsgemäß wahlweise einzeln oder zusammen ansteuerbar ausgebildet, wobei ohne starre Kopplung Laser-Schweißkopf und Linieninduktoren beispielsweise auf getrennten Wagen bewegbar sind.

Die durchzuführende mehrstufige Erwärmung des dem Laser-Schweißkopf nachlaufenden Schweißnahtbereiches ist weitgehend vom Gefüge des Stahlbandes abhängig. Der Laser-Schweißkopf wird deshalb mit einem den Prozessanforderungen angepassten und durch z. B. Temperaturmessung ermittelten optimalen Abstand vom Laser-Schweißkopf angeordnet. Erfindungsgemäß ist aber auch eine vom Laser-Schweißkopf gesteuerte unabhängige Bewegung des Linieninduktors möglich, um beispielsweise örtliche Überhitzungen in den Schweißnahtbereichen zu vermeiden, wozu beispielsweise der Abstand zum Laser-Schweißkopf oszillierend verändert wird.

Die mehrstufige Erwärmung des vorlaufenden Schweißnahtbereiches, die mittels eines vor dem Laserschweißkopf angeordneten gestuften Linieninduktors durchgeführt wird, kann wegen der direkt nachfolgenden Erhitzung durch den Laser-Schweißkopf mit dessen Geschwindigkeit erfolgen, weshalb es beispielsweise dann möglich und gegebenenfalls auch sinnvoll ist, diesen Linieninduktor dem Laser-Schweißkopf fest zuzuordnen bzw. ihn direkt an den Laser-Schweißkopf anzukoppeln. Es ist aber auch hier möglich, falls dies zur Prozessanpassung gefordert wird, den Linieninduktor mit oszillierender Abstandsänderung vor den Laser-Schweißkopf anzuordnen.

Die mit den mehrstufig ausgebildeten Linieninduktoren erreichbaren Vorteile sind somit zusammengefasst:
- Aufteilung der Leistungsdichte und damit Steuerung und Reduzierung einer Überhitzungsgefahr am Ende der Erwärmungszone,
- ein fester Aufbau ohne veränderbare Leiterlängen,
- die Schleifenaufteilung in unmittelbarer Wirknähe zum Stahlband,
- eine kompakte Bauform.

Weitere Einzelheiten der Erfindung werden nachfolgend an in schematischen Zeichnungsfiguren dargestellten Ausführungsbeispielen näher erläutert.

Es zeigen:
- Fig. 1: eine Einrichtung zur Wärmebehandlung der Schweißnaht,
- Fig. 2: einen einstufigen Linieninduktor nach dem Stand der Technik,
- Fig. 3: ein Temperatur-Zeit-Diagramm bei einstufiger Erwärmung,
- Fig. 4: die Stromaufteilung eines zweistufigen Linieninduktors,
- Fig. 5: einen zweistufigen Linieninduktor mit der Stromaufteilung der Fig. 4,
- Fig. 6: ein Temperatur-Zeit-Diagramm bei zweistufiger Erwärmung,
- Fig. 7: ein Temperatur-Zeit-Diagramm einer zweistufigen Nacherwärmung mit Wiedererwärmung.

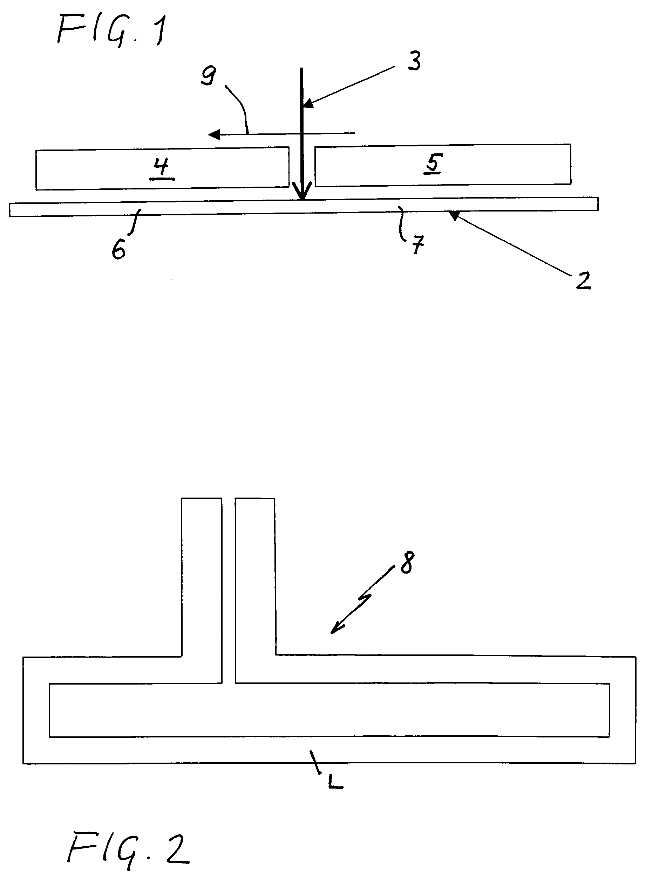

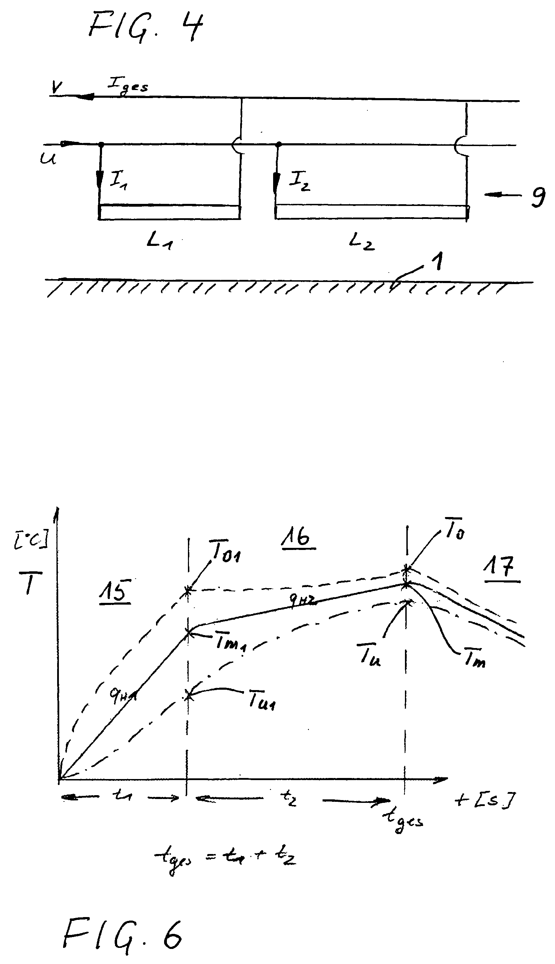

In der Figur 1 ist eine Einrichtung zum Schweißen und zur Wärmebehandlung der Schweißnaht 1 (vgl. Fig. 4) in einem Stahlband 2 schematisch dargestellt. Sie besteht aus einem Laser-Schweißkopf 3 und einem davor angeordneten Linieninduktor 4 und einem dahinter angeordneten Linieninduktor 5. Der Laser-Schweißkopf 3 und die beiden Linieninduktoren 4, 5 werden in diesem Ausführungsbeispiel zum Schweißvorgang und zur Wärmebehandlung in Bewegungs- bzw. Schweißrichtung 9 bewegt, während das Stahlband 2 fest eingespannt ist. Die hier dargestellte Ausführung ist auch für verschiebbare Bleche bei einer feststehenden Anordnung der Linieninduktoren 4, 5 und des LaserSchweißkopfes 3 verwendbar. Der dem Laser-Schweißkopf 3 vorlaufende Linieninduktor 4 wärmt das Stahlband 2 in einem der Länge des Linieninduktor 4 entsprechenden vorlaufenden Schweißnahtbereich 6 auf und in gleicher Weise wird der dem Laser-Schweißkopf 3 folgende (nachlaufende) Schweißnahtbereich 7 von dem hinter dem Laser-Schweißkopf 3 angeordneten nachlaufenden Linieninduktor 5 nacherwärmt.

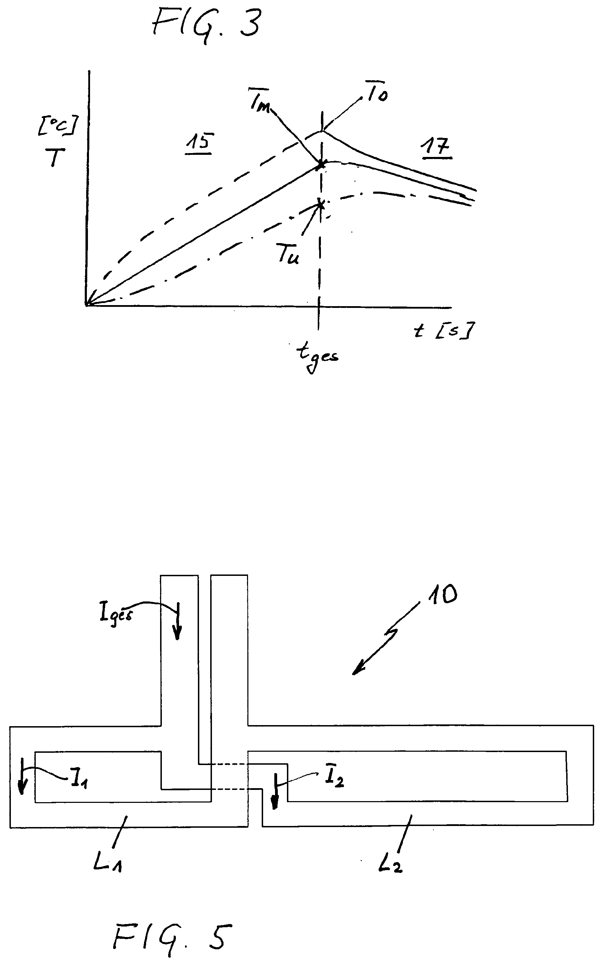

Die zur Wärmebehandlung eingesetzten Linieninduktoren sind nach dem Stand der Technik üblicherweise einstufig ausgebildet. Ein mit einem derartigen, in der Figur 2 beispielhaft abgebildeten Linieninduktor 8 mit nur einer Leiterschleife mit durchgehender Stufenlänge L durchgeführter einstufiger Erwärmungsprozess ergibt das in der Figur 3 abgebildete prinzipielle Temperatur-Zeit-Diagramm. Wie dem Diagramm zu entnehmen ist, besteht zwischen der Temperatur Tₒ der Bandoberseite und der Temperatur Tᵤ der Bandunterseite ein größerer Temperaturunterschied mit einem Maximum am Ende der Aufheizzeit t_{ges}, da die Temperaturdifferenz direkt proportional zur Heizleistungsdichte q des Linieninduktors und der Erwärmungszeit t ist. Die Abweichungen zur angestrebten Prozesstemperatur Tₘ nach Ende der Aufheizzone 15 und vor Beginn der Abkühlzone 17 ist teilweise zu groß, weshalb die Gefahr einer Überhitzung des Gefüges besteht.

In der Figur 4 ist ein zweistufiger Linieninduktor mit zwei unterschiedlich lang ausgebildeten Stufenlängen L₁ und L₂ dargestellt. Da die Erwärmung auf die ange-strebte Prozesstemperatur Tₘ beim zweistufigen Linieninduktor 10 (vgl. Fig. 5) die gleiche Energieeinbringung Q • t_{ges} = qₕ₁ • t₁ + qₕ₂ • t₂ wie beim einstufigen Linieninduktor 8 erfordert (mit qₕ₁ • t₁ für die erste Erwärmungsstufe und qₕ₂ • t₂ für die zweite Erwärmungsstufe) und die Stromaufteilung I_{ges} auf die Teilströme I₁ und I₂ umgekehrt proportional zur den beiden Stufenlängen L₁ und L₂ ist, kann mit entsprechender Wahl den Stufenlängen die Energieeinbringung auf einzelne Erwärmungsstufen gesteuert werden.

Die hieraus folgende beispielhafte Stromaufteilung auf die unterschiedlich langen Stufenlängen L₁ und L₂ des zweistufigen Linieninduktors 10 ist in der Figur 5 eingezeichnet. Die kürzere Stufe L₁ mit einer gegenüber der längeren Stufe L₂ höheren Leistungsdichte I₁ befindet sich in Schweißrichtung 9 vorne, d. h. der zu behandelnde Schweißnahtbereich wird zunächst mit einer höheren Leistungsdichte beaufschlagt. Aus den Fig. 4 und 5 ist weiter erkennbar, in welcher Weise die Stromaufteilung bei einem zweistufigen Linieninduktor 10 durch spezielle Anordnung und Stromzuführung der beiden Leiterschleifen mit ihren unterschiedlich langen Stufenlängen L₁ und L₂ realisiert werden kann.

Das Ergebnis eines mit einem derartigen Linieninduktor 10 durchgeführten zweistufigen Erwärmungsprozesses ergibt nun das in der Figur 6 abgebildete prinzipielle Temperatur-Zeit-Diagramm. Der steile Temperaturanstieg in der ersten Erwärmungsstufe 15 führt zwar gleichfalls zu starken Temperaturdifferenzen zwischen den Bandtemperaturen Tₒ und Tᵤ bis zum Ende der ersten Erwärmungsstufe bei t₁, anschließend findet dann in der zweiten Erwärmungsstufe 16 über den Zeitraum t₂ aber ein Temperaturausgleich statt, so dass nach Ablauf dieser zweiten Wärmebehandlung bei t_{ges} die Temperaturabweichungen vom angestrebten Mittelwert der Bandtemperatur Tₘ gegenüber der einstufigen Erwärmung deutlich geringer ausfallen.

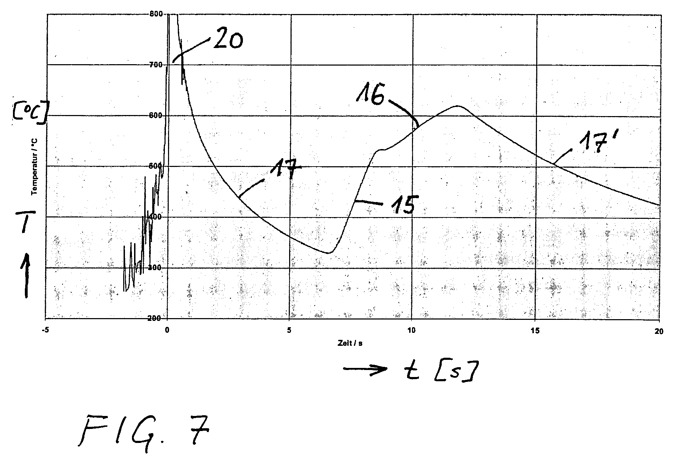

Das reale Ergebnis einer zweistufigen Nacherwärmung mit einer Wiedererwärmung ist in der Figur 7 dargestellt. Der Verlauf der Temperaturkurve beginnt in dem hier gezeigten Temperatur-Zeit-Diagramm mit dem unmittelbaren Schweißbereich 20 bei t = 0 mit anschließender steil verlaufender Abkühlung 17. Bei einer vorherbestimmten Temperatur, hier etwa bei 320 °C, beginnt mit steilem Temperaturanstieg die erste Erwärmungsstufe 15 der Wiedererwärmung mit einer Dauer von etwa 1,7 Sekunden bis zu einer Temperatur von etwa 520 °C. Unmittelbar darauf folgt die zweite Erwärmungsstufe 16 mit nun flacherem Temperaturanstieg bis zu einer Gesamterwärmungszeit etwa 3,3 Sekunden und einer Endtemperatur ca. 620 °C. Danach folgt eine endgültige Abkühlung mit durch die Wiedererwärmung flachen Abkühlkurve 17'. Es gibt allerdings Fälle, in denen die Zone 16 eine reine Haltezone oder sogar eine Zone mit verzögerter Abkühlung ist. Bei einer verzögerten Abkühlung reicht die in das System eingespeiste Energie nicht aus, um die Wärmeabgabe an die Umgebung auszugleichen.

### Bezugszeichenliste

- 1: Schweißnaht
- 2: Stahlband
- 3: Laser-Schweißkopf
- 4: Linieninduktor für Vorerwärmung
- 5: Linieninduktor für Nacherwärmung
- 6: vorlaufender Schweißnahtbereich
- 7: nachlaufender Schweißnahtbereich
- 8: einstufiger Linieninduktor
- 9: Schweißrichtung, Bewegungsrichtung
- 10: zweistufiger Linieninduktor
- 15, 16: Aufheizzone
- 17, 17': Abkühlzone
- 20: unmittelbarer Schweißbereich

- L: Länge der Schleife
- L₁, L₂: Stufenlänge des Linienleiters
- I₁, I₂: Stromstärke
- T: Bandtemperatur
- Tₒ: Temperatur der Bandoberseite
- Tᵤ: Temperatur der Bandunterseite
- Tₘ: mittlere Bandtemperatur
- t: Zeit
- t₁: Ende der ersten Erwärmungsstufe
- t₂: Ende der zweiten Erwärmungsstufe
- t_{ges}: Gesamtaufheizzeit

## Patentansprüche

1. Verfahren zur induktiven Wärmebehandlung von Schweißnähten in einer Schweißmaschine mit einem Laser-Schweißkopf (3) zur Verbindung von Stahlbändern (2),
wobei ein Erwärmungsprozess der Schweißnaht (1) und der angrenzenden Schweißnahtbereiche (6, 7) vor und hinter der eigentlichen Schweißung mittels Linieninduktoren (4, 5) durchgeführt wird,
wobei die Erwärmung des Schweißnahtbereiches (6, 7) mittels eines definiert einstellbaren mehrfach gestuften Linieninduktors (4, 5) mit Zonen unterschiedlicher Leistungsdichten erfolgt, der mit einer mehrfachen Aufteilung seiner Leiterschleifenlängen und/oder mit einer unterschiedlichen Beblechung der Leiterschleifen und/oder mit mehreren unterschiedlichen Abstandsstufen zum Stahlband (2) ausgebildet ist.
**dadurch gekennzeichnet,**
**dass** die Aufteilung der gesamten für die Erwärmung aufzubringenden Heizleistungsdichte q_{H} auf die einzelnen Erwärmungsstufen (t₁, t₂) so durchgeführt wird, dass in der ersten Erwärmungsstufe (t₁) ein steilerer Temperaturanstieg als in der folgenden Erwärmungsstufe (t₂) stattfindet.

2. Verfahren nach Anspruch 1,
**dadurch gekennzeichnet, dass** die Leistungsaufteilung bei einer zweistufigen Erwärmung zwischen der ersten (t₁) und der zweiten Erwärmungsstufe (t₂) im Verhältnis 3:1 durchgeführt wird.

3. Verfahren nach Anspruch 1 oder 2,
**dadurch gekennzeichnet, dass** zwischen einzelnen Erwärmungsstufen (t₁, t₂) eine Haltezeit bei einer durch Temperaturmessung speziell angepassten Temperatur mit anschließender Kühlung des vorher aufgewärmten Schweißnahtbereiches (7) vorgesehen ist, an die dann eine Wiedererwärmung anschließt.

4. Vorrichtung zur induktiven Wärmebehandlung von Schweißnähten in einer Schweißmaschine mit einem Laser-Schweißkopf (3) zur Verbindung von Stahlbändern (2),
zur Durchführung des Verfahrens nach den Ansprüchen 1 bis 3, aufweisend:
einen für die Vor- und Nacherwärmung einsetzbaren mehrstufigen Linieninduktor (4, 5) mit unterschiedlicher Leistungsdichte über seine Länge, wobei die Aufteilung der Leistungsdichte
mehrere Leiterschleifen und stufenweiser Veränderung der Teilleiterlängen und/oder
eine unterschiedliche Beblechung der Leiterschleife(n) über seine Länge, wobei auch innerhalb einer Leiterschleife eine unterschiedliche Leistungsdichte erreichbar ist und/oder
durch unterschiedliche stufenweise Einkoppelabstände zwischen dem Linieninduktor (4, 5) und dem Stahlband (2), durch die gleichfalls innerhalb einer Leiterschleife eine unterschiedliche Leistungsdichte hergestellt ist,
**dadurch gekennzeichnet, dass**
der mehrstufige Linieninduktor ausgebildet ist, die für die Erwärmung aufzubringende Heizleistungsdichte q_{H} auf die einzelnen Erwärmungsstufen (t1, t2) so aufzuteilen, dass in der ersten Erwärmungsstufe (t1) ein steilerer Temperaturanstieg als in der folgenden Erwärmungsstufe (t2) stattfindet.

5. Vorrichtung nach Anspruch 4,
**dadurch gekennzeichnet,**
**dass** einzelne Leiterschleifen zur Erzeugung von Ausgleichszonen zwischen einzelnen Erwärmungszonen unterbrochen sind.

6. Vorrichtung nach Anspruch 4 oder 5,
**dadurch gekennzeichnet,**
**dass** die Linieninduktoren (4, 5) für die Vor- und Nacherwärmung wahlweise einzeln oder zusammen ansteuerbar ausgebildet sind.

7. Vorrichtung nach Anspruch 4, 5 oder 6,
**dadurch gekennzeichnet,**
**dass** ein Linieninduktor (4) vor und ein Linieninduktor (5) hinter dem Laser-Schweißkopf (3) mit variablem Abstand angeordnet ist.

8. Vorrichtung nach Anspruch 4, 5 oder 6,
**dadurch gekennzeichnet, dass** der Linieninduktor (4) mit dem Laser-Schweißkopf (3) gekoppelt ist.

9. Vorrichtung nach einem oder mehreren der Ansprüche 4 bis 8,
**dadurch gekennzeichnet, dass** das Stahlblech fest eingespannt und der Laser-Schweißkopf (3) und die Linieninduktoren (4, 5) verschiebbar sind.

10. Vorrichtung nach einem oder mehreren der Ansprüche 4 bis 9,
**dadurch gekennzeichnet, dass** das Stahlblech verschiebbar ist und zumindest der Laser-Schweißkopf (3) ortsfest angeordnet ist.

## Claims

1. Method for inductive heat treatment of weld seams in a welding machine with a laser welding head (3) for the connection of steel strips (2),
wherein a heating process of the weld seam (1) and the adjoining weld seam regions (6, 7) is undertaken, in front of and behind the actual welding, by means of linear inductors (4, 5) wherein the heating of the weld seam region (6, 7) is carried out by means of a definedly 'settable' multiply stepped linear inductor (4, 5) with zones of different power densities, which are formed by a multiple division of its conductor loop lengths and/or by a different core lamination of the conductor loops and/or by a plurality of different spacing steps from the steel strip (2),
**characterised in that**
the division of the total heating power density q_{H}, which is to be applied for the heating, into the individual heating steps (t₁, t₂) is undertaken in such a way that a steeper temperature rise takes place in the first heating step (t₁) than in the following heating step (t₂).

2. Method according to claim 1, **characterised in that** the power division in the case of a two-stage heating between the first heating step (t₁) and the second heating step (t₂) is undertaken in the ratio 3:1.

3. Method according to claim 1 or 2, **characterised in that** provided between individual heating steps (t₁, t₂) is a holding time in the case of a temperature, which is specially adapted by temperature measurement, with subsequent cooling of the previously heated weld seam region (7), after which a reheating then follows.

4. Device for inductive heat treatment of weld seams in a welding machine with a laser welding head (3) for the connection of steel strips (2), for carrying out the method according to any one of claims 1 to 3, comprising:
a multi-step linear inductor (4, 5), which is usable for pre-heating and post-heating, with different power densities over its length, wherein the division of the power densities is by several conductor loops and stepped change of the part-conductor lengths and/or a different core lamination of the conductor loop(s) over its length, wherein a different power density is also achievable within a conductor loop, and/or by different stepped coupling spacings between the linear inductor (4, 5) and the steel strip (2), by which at the same time a different power density is produced within the conductor loop,
**characterised in that** the multi-step linear inductor is constructed to so divide the heating power density (q_{H}), which is to be applied for the heating, into the individual heating steps (t₁, t₂) that a steeper temperature rise takes place in the first heating step (t₁) than in the following heating step (t₂).

5. Device according to claim 4, **characterised in that** individual conductor loops are interrupted to produce compensating zones between individual heating zones.

6. Device according to claim 4 or 5, **characterised in that** the linear inductors (4, 5) for the pre-heating and post-heating are constructed to be selectably activatable individually or together.

7. Device according to claim 4, 5 or 6, **characterised in that** a linear inductor (4) is arranged in front and a linear inductor (5) behind the laser welding head (3) at variable spacings.

8. Device according to claim 4, 5 or 6, **characterised in that** the linear inductor (4) is coupled with the laser welding head (3).

9. Device according to one or more of claims 4 to 8, **characterised in that** the steel plate is fixedly clamped in place and the laser welding head (3) and the linear inductors (4, 5) are displaceable.

10. Device according to one or more of claims 4 to 9, **characterised in that** the steel plate is displaceable and at least the laser welding head (3) is arranged in stationary position.

## Revendications

1. Procédé pour le traitement thermique par induction de cordons de soudure dans une machine à souder comprenant une tête de soudage au laser (3) pour la liaison de bandes d'acier (2) :
dans lequel on met en oeuvre un processus de chauffage du cordon de soudure (1) et des zones adjacentes (6, 7) au cordon de soudure avant et après le soudage proprement dit au moyen d'inducteurs linéaires (4, 5) ;
dans lequel le chauffage de la zone adjacente (6, 7) au cordon de soudure a lieu au moyen d'un inducteur linéaire à plusieurs niveaux (4, 5) qui peut être réglé de manière définie, comprenant des zones de densités de puissance différentes, que l'on obtient via une répartition multiple de ses longueurs de boucles conductrices et/ou avec un tôlage différent des boucles conductrices et/ou avec plusieurs niveaux d'intervalles différents par rapport à la bande d'acier (2) ;
**caractérisé en ce que** la répartition de la totalité de la densité de puissance de chauffage q_{H} à appliquer pour le chauffage sur les niveaux de chauffage individuels (t₁, t₂) est mise en oeuvre de manière telle que dans le premier niveau de chauffage (t₁), on obtient une élévation de la température plus raide que dans le niveau de chauffage suivant (t₂).

2. Procédé selon la revendication 1, **caractérisé en ce que** la répartition de puissance a lieu, dans le cas d'un chauffage à deux niveaux, entre le premier niveau de chauffage (t₁) et le deuxième niveau de chauffage (t₂), dans le rapport 3:1.

3. Procédé selon la revendication 1 ou 2, **caractérisé en ce qu'**on prévoit, entre des niveaux de chauffage individuels (t₁, t₂), un temps de maintien à une température adaptée de manière spécifique par mesure de la température, suivi d'un refroidissement de la zone du cordon de soudure (7) chauffée au préalable, auquel se raccorde un nouveau chauffage.

4. Dispositif destiné au traitement thermique par induction de cordons de soudure dans une machine à souder comprenant une tête de soudage au laser (3) pour la liaison de bandes d'acier (2), pour la mise en oeuvre du procédé selon les revendications 1 à 3, présentant :
un inducteur linéaire (4, 5) à plusieurs niveaux qui peut être utilisé pour le chauffage préalable et pour le chauffage ultérieur comprenant différentes densités de puissance réparties sur sa longueur, la répartition de la densité de puissance étant obtenue via plusieurs boucles conductrices et
une modification par niveaux des longueurs conductrices partielles et/ou via un tôlage différent de la/des boucles conductrices sur sa longueur, une densité de puissance différente pouvant également être atteinte à l'intérieur d'une boucle conductrice, et/ou via des intervalles de couplage par niveaux différents entre l'inducteur linéaire (4, 5) et la bande d'acier (2), par lesquels on obtient également une densité de puissance différente au sein d'une boucle conductrice ;
**caractérisé en ce que** l'inducteur linéaire à plusieurs niveaux est réalisé de manière telle que l'on répartit la densité de puissance de chauffage q_{H} à appliquer pour le chauffage sur les niveaux de chauffage individuels (t₁, t₂), de telle sorte que dans le premier niveau de chauffage (t₁), on obtient une élévation de la température plus raide que dans le niveau de chauffage suivant (t₂).

5. Dispositif selon la revendication 4, **caractérisé en ce que** des boucles conductrices individuelles sont interrompues pour obtenir des zones de compensation entre des zones de chauffage individuelles.

6. Dispositif selon la revendication 4 ou 5, **caractérisé en ce que** les inducteurs linéaires (4, 5), pour le chauffage préalable et le chauffage ultérieur, sont réalisés pour pouvoir être commandés de manière individuelle ou de manière conjointe selon ce que l'on souhaite.

7. Dispositif selon la revendication 4, 5 ou 6, **caractérisé en ce qu'**on dispose un inducteur linéaire (4) en amont et un inducteur linéaire (5) en aval de la tête de soudage au laser (3), avec une distance variable.

8. Dispositif selon la revendication 4, 5 ou 6, **caractérisé en ce que** l'inducteur linéaire (4) est couplé à la tête de soudage au laser (3).

9. Dispositif selon une ou plusieurs des revendications 4 à 8, **caractérisé en ce que** la tôle d'acier est fermement serrée et la tête de soudage au laser (3) et les inducteurs linéaires (4, 5) sont mobiles.

10. Dispositif selon une ou plusieurs des revendications 4 à 9, **caractérisé en ce que** la tôle d'acier est mobile et au moins la tête de soudage au laser (3) est montée à demeure.
